# EUROPÄISCHE PATENTSCHRIFT

(11) **EP 3 757 411 B1**
(45) Veröffentlichungstag und Bekanntmachung des Hinweises auf die Patenterteilung: **24.08.2022**
(21) Anmeldenummer: 20167670.7
(22) Anmeldetag: 02.04.2020
(51) Int. Cl.: F16C 27/06, F16C 19/06

(54) **LAGERANORDNUNG**
BEARING ASSEMBLY
AGENCEMENT DE PALIER

(30) Priorität: 26.06.2019 DE 102019117267
(43) Veröffentlichungstag der Anmeldung: 30.12.2020
(73) Patentinhaber: Henniges Automotive GmbH & Co. KG, 31547 Rehburg Loccum (DE)
(72) Erfinder: SEIPEL, Petric, 31515 Wunstorf (DE)
(74) Vertreter: Bardehle Pagenberg Partnerschaft mbB Patentanwälte Rechtsanwälte

(56) Entgegenhaltungen:
- EP-A1- 0 462 870
- EP-A2- 1 489 326
- DE-A1-102014 107 477
- DE-A1-102017 110 874
- JP-A- 2000 192 954
- JP-A- 2013 099 995

## Beschreibung

Die Erfindung betrifft eine Lageranordnung zum Einbau in einen Lagerträger mit wenigstens einem Drehlager sowie wenigstens einer das Drehlager aufnehmenden Elastomermanschette, wobei die Elastomermanschette wenigstens eine zur Aufnahme in den Lagerträger ausgebildete Reibschlussfläche hat.

Derartige Lageranordnungen sind insbesondere im Kraftfahrzeugbau zur Schwingungsdämpfung eingesetzte Gelenkwellenmittellager oder Kardanwellenzwischenlager, deren Elastomermanschetten für die Antriebswellen als Schwingungsdämpfer fungieren. Die Lageranordnung selbst besteht zumindest aus dem Drehlager und der das Drehlager zumindest teilweise umgebenden Elastomermanschette. Zur betriebssicheren Aufnahme der Elastomermanschette in einem Lagerträger ist die sogenannten Insert-Technologie bekannt, wobei die Elastomermanschette und das von der Elastomermanschette zumindest teilweise umgebende Drehlager als Insert bezeichnet werden. Bei der Insert-Technologie wird die Elastomermanschette durch Verpressen, Umformen, Fügen oder Umspritzen von Klemm- oder Anschlussringen in dem Lagerträger angeordnet. Der Lagerträger trägt das Insert und dient der Anordnung des Inserts an einem Fahrzeug. Es kann auch gesagt werden, dass das Insert in einer Öffnung des Lagerträgers angeordnet wird, wobei nur die Elastomermanschette und der Lagerträger direkten also unmittelbaren Kontakt haben, nicht aber das Drehlager und der Lagerträger, um Schwingungen und Vibrationen der durch das Drehlager geführten Welle nicht auf den Lagerträger und letztendlich auf das Fahrzeug zu übertragen. D.h. die Elastomermanschette hat direkten Kontakt mit der Innenseite des Lagerträgers, also der Seite des Lagerträgers, die dem Drehlager zugewandt ist und das Drehlager hat mittelbaren Kontakt mit der Innenseite des Lagerträgers über die Elastomermanschette. Insgesamt gestaltet sich die Herstellung derartiger Lagerträger mit entsprechenden Lageranordnungen aufwendig, da das Verpressen, die Einhaltung enger Toleranzmaße, das Umformen den Einsatz teurer Bördelwerkzeuge, das Fügen den Einsatz zusätzlicher Sicherungselemente und das Umspritzen den Einsatz teurer Spritzgusswerkzeuge erfordert.

Ein Beispiel einer Lageranordnung mit Lagerträger ist aus der deutschen Offenlegungsschrift DE 10 2017 110 874 A1 bekannt. Diese beschreibt eine Lageranordnung, bei der die Elastomermanschette eine Elastomerfalte aufweist, über deren Faltenverlauf hinweg das Manschettenmaterial eine Steifigkeitsschwächung hat. Eine in diese Lageranordnung eingeleitete Axialkraft führt dann dazu, dass sich die Materialschwächung aus der Elastomerfalte herausbewegt und ein neu in die Elastomerfalte gelangender Bereich mit höherer Steifigkeit zu einer Erhöhung der an der Reibschlussfläche angreifenden Normalkräfte und damit zu einer Verstärkung eines zwischen Elastomermanschette und Lagerträger hergestellten Kraftschlusses führt.

JP 2000192954 A offenbart eine Lageranordnung gemäß dem Oberbegriff des Anspruchs 1. Widrige Umstände, wie beispielsweise eine Verunreinigung der kraftschlüssig miteinander in Eingriff stehenden Oberflächen, also der dem Lagerträger zugewandten Oberfläche der Elastomermanschette und der der Elastomermanschette zugewandten Oberfläche des Lagerträgers, mit Schmierstoffen, können jedoch dazu führen, dass die bekannten Lageranordnungen ihre Selbsthemmung verlieren und sich das Drehlager mitsamt seiner Elastomermanschette aus seinem Lagerträger herausbewegt.

Der Erfindung liegt deshalb die Aufgabe zugrunde, eine Lageranordnung der eingangs genannten Art aufzuzeigen, bei der das Risiko eines Herausbewegens des Drehlagers mitsamt seiner Elastomermanschette aus seinem Lagerträger auf besonderes einfache Weise signifikant verringert ist.

Diese Aufgabe ist erfindungsgemäß durch eine Lageranordnung mit den Merkmalen des Patentanspruchs 1 gelöst. Vorteilhafte Weiterbildungen der Erfindung sind in den Unteransprüchen angegeben.

Die erfindungsgemäße Lageranordnung besteht aus einem Drehlager sowie einer das Drehlager zumindest teilweise umgebenden Elastomermanschette. Die erfindungsgemäße Lageranordnung zeichnet sich dadurch aus, dass die Elastomermanschette wenigstens einen Anschlagkragen aufweist, der derart ausgestaltet ist, dass er bei der Montage an einem entsprechenden Lagerträger in unmittelbaren Kontakt mit dem Lagerträger kommt. Es kann auch gesagt werden, dass der Anschlagkragen auf einem Rand des Lagerträgers zu liegen kommt. Der Lagerträger wiest zwei Ränder auf, die durch eine axiale Öffnung im Lagerträger gegeben sind, wobei in der Öffnung die erfindungsgemäße Lageranordnung aufgenommen wird. Der Anschlagkragen weist Ausnehmungen auf. Die Ausnehmungen sind derart ausgestaltet, dass zumindest teilweise in ihnen Federklammern angeordnet wird, um die Elastomermanschette am Lagerträger zu sichern. Der Anschlagkragen ist ein an der Elastomermanschette ausgeformter Axialanschlag zur einseitigen Begrenzung einer axialen Bewegung des Drehlagers innerhalb seines Lagerträgers. Der Anschlagkragen weist dabei eine äußere Geometrie auf, die ein Durchrutschen durch die Öffnung des Lagerträgers in zumindest eine Richtung verhindert. Beispielsweise kann die Elastomermanschette sowie die Öffnung im Lagerträger rund ausgestaltet sein. In diesem Fall kann der Anschlagkragen der Elastomermanschette einen Außendurchmesser aufweisen, der größer ist als der Innendurchmesser der Öffnung im Lagerträger. Dies verhindert eine Bewegung der Elastomermanschette durch den Lagerträger in Richtung der dem Anschlagkragen gegenüberliegenden Seite. Mit den Federklammern ist ein zweiter Axialanschlag ausgebildet, der in einer entgegengesetzten Richtung zu dem mit dem Anschlagkragen ausgebildeten Axialanschlag wirkt. Hierdurch wird die Lageranordnung bestehend aus dem Drehlager und der Elastomermanschette hinsichtlich seiner axialen Bewegungsfreiheit zwischen diesen beiden Axialanschlägen festgesetzt oder fixiert. Die Ausnehmungen für die Federklammern sind partiell maximal klein ausgebildete Zugangsöffnungen, durch welche hindurch die Federklammern am Lagerträger festgesteckt werden können. Dabei verkrallen oder verklemmen sich die Federklammern beidseitig oder zumindest einseitig am Lagerträger. Die Krall- oder Klemmwirkung wird dabei zwischen dem innenliegenden Teil der Federklammern und dem außenliegenden Teil der Federklammern erzeugt.

Der innenliegende Teil der Federklammern ist in Kontakt mit der inneren Oberfläche des Lagerträgers sein, also der Oberfläche des Lagerträgers, die dem Drehlager zugewandt ist. In einer nicht beanspruchten Ausführungsform (mittelbarer Kontakt) kann zwischen dem innenliegenden Teil der Federklammern und dem Lagerträger noch eine dünne Schicht der Elastomermanschette angeordnet sein. In diesem Fall ist die Ausnehmung vollständig in der Elastomermanschette gebildet. Es kann auch gesagt werden, die Ausnehmung ist bis auf eine Seite mit dem Material der Elastomermanschette umgeben. Die eine freie Seite der Ausnehmung in der beanspruchten Ausführungsform ist die, in die der innenliegende Teil der Federklammern eingreift oder durchgreift. In die beanspruchten Ausführungsform (unmittelbarer Kontakt) ist der innenliegende Teil der Federklammern in direktem Kontakt mit der inneren Oberfläche des Lagerträgers. In diesem Fall befindet sich also zwischen dem innenliegenden Teil der Federklammern und der inneren Oberfläche des Lagerträgers kein Material der Elastomermanschette mehr. In diesem Fall kann auch gesagt werden, die Ausnehmung in der Elastomermanschette hat zumindest zwei Seiten, die nicht vom Material der Elastomermanschette umgeben sind. Die eine Seite ist die in die der innenliegende Teil der Federklammern eingreift oder durchgreift und die andere Seite ist die, die der inneren Oberfläche des Lagerträgers zugewandt ist. Beim unmittelbaren Kontakt kann auch gesagt werden, dass der innenliegende Teil der Federklammern die Innenseite der Öffnung im Lagerträger kontaktiert.

Der außenliegende Teil der Federklammern ist in unmittelbaren Kontakt mit der äußeren Oberfläche des Lageträgers, also der Oberfläche des Lagerträgers, die dem Drehlager abgewandt ist. Es kann auch gesagt werden, die Federklammer umgreift zumindest teilweise den Lagerträger und fixiert dabei den Anschlagkragen der Elastomermanschette am Rand der Öffnung des Lagerträgers. Dabei kann zumindest ein Teil der Federklammer in Eingriff oder in Formschluss mit dem Anschlagkragen der Elastomermanschette gebracht werden, um diese am Rand der Öffnung des Lagerträgers zu fixieren.

Nach einer ersten Weiterbildung der Erfindung weisen die Federklammern in Schneidkanten zusammenlaufende Klemmflächen auf. Diese können zum Beispiel an dem außenliegenden Teil der Federklammern angeordnet sein, um sich in den Lagerträger zu krallen, um so die Reibung zu erhöhen. Je nach Ausgestaltung der Elastomermanschette können aber auch auf den innenliegenden Teilen der Federklammern Schneidkanten angeordnet sein. Bevorzugt gibt es in diesem Fall einen Abstand zwischen den innenliegenden Teilen der Federklammern und der Elastomermanschette, so dass diese nicht beschädigt wird. Die Federklammern können aus Metall hergestellt sein, wenigstens jedoch aus einem Werkstoff, der härter als der des Lagerträgers ist. An den Schenkeln der Federklammern wirkende Klemmkräfte führen somit zu einer Oberflächenverletzung des Lagerträgers und damit zu einem Verkrallen der Schneidkanten in dem Lagerträger. Mit anderen Worten, die Schneidkanten schneiden in das Material des Lagerträgers ein und verhindern eine Bewegung der Federklammern in eine axiale Richtung. Diese Richtung ist der axialen Richtung entgegengesetzt, gegen die der Anschlagkragen eine Bewegung verhindert. Mit der Verkrallung ist die Sicherheit gegen unbeabsichtigtes Lösen der Lageranordnung vom Lagerträger vorteilhaft vergrößert. Es ist aber auch möglich, dass die Federklammern aus Kunststoff hergestellt sind.

Nach einer nächsten Weiterbildung der Erfindung weisen die Federklammern formschlüssig mit den Ausnehmungen zusammenwirkende Klammerköpfe auf. Diese Klammerköpfe bilden die eigentliche Anschlagstruktur aus, welche die Elastomermanschette gegen ein unbeabsichtigtes Herausrutschen aus dem Lagerträger sichert. Dabei lässt die vorliegende Erfindung der konstruktiven Ausgestaltung der Klammerköpfe einigen Spielraum. Die Klammerköpfe müssen nur derart ausgestaltet sein, dass diese in Verbindung oder in Formschluss mit dem Anschlagkragen der Elastomermanschette gebracht werden können, um die Elastomermanschette am Rand des Lagerträgers zu halten.

Nach einer bevorzugten Weiterbildung der Erfindung weisen die Ausnehmungen der Elastomermanschette Durchbrüche mit einer Senkung zur oberflächenbündigen oder vertieften Aufnahme der Klammerköpfe auf. Dies bedeutet, dass die Klammerköpfe vom Anschlagkragen der Elastomermanschette derart aufgenommen werden, dass sich die Klammerköpfe nicht über den Anschlagkragen hinwegerstrecken. Es kann auch gesagt werden, der Anschlagkragen nimmt die Klammerköpfe zumindest teilweise auf. Hierzu können die Ausnehmungen des Anschlagkragens Senkungen aufweisen, die in Form und Ausgestaltung im Wesentlichen komplementär zu den Klammerköpfen ausgestaltet sind. Hierdurch wird nicht nur die formschlüssige Verbindung zwischen dem Anschlagkragen und den Klammerköpfe gewährleistet, sondern auch, dass sich diese nicht über den Anschlagkragen hinweg erstrecken und damit oberflächenbündig oder vertieft mit dem Anschlagkragen sind. Die Senkungen können im Rahmen der Erfindung auch als zum Kragenrand des Anschlagkragens hin offene Ausklinkungen ausgeführt sein.

Die erfindungsgemäße Lageranordnung gewährleistet eine hinreichende Befestigung der Elastomermanschette und damit des Drehlagers in dem Lagerträger, wenn die Elastomermanschette mittels wenigstens dreier rotationssymmetrisch angeordneter Federklammern am Lagerträger gesichert ist. Besondere Belastungen und Dimensionierungen der Lageranordnung können jedoch den Einsatz von mehr als drei rotationssymmetrisch angeordneten Federklammern erforderlich machen.

Um die erfindungsgemäße Lageranordnung besonders einfach herstellen zu können, sind die Federklammern aus Federstahlblech gefertigte Biegeteile. Derartige Biegeteile können in großen Stückzahlen besonders kostengünstig hergestellt werden. Die Erfindung ist jedoch nicht auf Federklammern aus Federstahlblech begrenzt. Selbstverständlich können andere Metalle, Legierungen oder auch Faserverbundwerkstoffe geeignete Alternativen darstellen.

Nach einer besonders vorteilhaften Weiterbildung der Erfindung weist die Elastomermanschette wenigstens eine Elastomerfalte auf, über deren Faltenverlauf hinweg das Manschettenmaterial wenigstens eine Steifigkeitsschwächung hat. Eine über das Drehlager in den Lagerträger eingeleitete Axialkraft führt dann dazu, dass die Materialschwächung aus der Elastomerfalte herauswandert, und ein neu in die Elastomerfalte gelangender Bereich mit höherer Steifigkeit zu einer Erhöhung der an der Reibschlussfläche angreifenden Normalkräfte und damit zu einer Verstärkung des zwischen Elastomermanschette und Lagerträger hergestellten Kraftschlusses führt. Mit der Verstärkung des Kraftschlusses weist die erfindungsgemäße Lageranordnung eine Art Selbsthemmung auf, mit der die über die Federklammern hergestellte Sicherung entlastet ist.

Ein Ausführungsbeispiel der Erfindung, aus dem sich weitere erfinderische Merkmale ergeben, ist in der Zeichnung dargestellt. Es zeigen:
- Fig. 1:: eine erfindungsgemäße Lageranordnung im Mittenschnitt angeordnet in einem Lagerträger;
- Fig. 2:: eine perspektivische Ansicht der erfindungsgemäßen Lageranordnung gemäß Fig. 1; und
- Fig. 3:: eine vergrößerte Detailansicht der erfindungsgemäßen Vorrichtung gemäß Fig. 2.

Die hierin verwendete Terminologie dient nur dem Zwecke des Ausführungsbeispiel und soll nicht beschränkend sein. Wie hierin verwendet können die Singularformen von "einer/eine/eines" und "der/die/das" ebenso die Pluralformen beinhalten, es sei denn, dass der Kontext eindeutig etwas gegenteiliges anzeigt.

Räumlich relative Begriffe wie "innen", "außen", "unterhalb", "darunter", "niedriger", "oberhalb", "über" und ähnliches können hierin verwendet werden zum Zwecke der Beschreibung, um die Beziehung eines Elements oder Merkmals zu einem anderen Element oder Merkmal wie in den Figuren gezeigt zu beschreiben. Räumlich relative Begriffe können verschiedene Orientierungen der erfindungsgemäßen Anordnung umfassen, zusätzlich zu der Orientierung, die in den Figuren dargestellt ist.

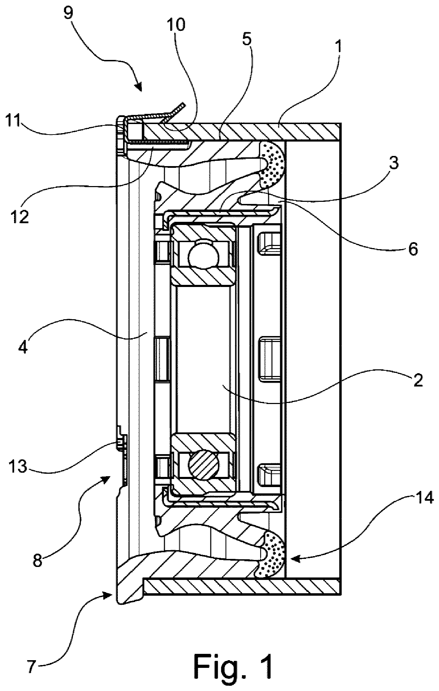

Die Fig. 1 zeigt eine erfindungsgemäße Lageranordnung, die in einen Lagerträger 1 eingebaut ist. Die Lageranordnung umfasst ein Drehlager 2, einen das Drehlager 2 aufnehmenden Lagerkäfig 3 sowie einen das Drehlager 2 zusammen mit dem Lagerkäfig 3 aufnehmende Elastomermanschette 4. Die Elastomermanschette 4 weist eine zur Aufnahme in einem Lagerträger 1 ausgebildete Reibschlussfläche 5 sowie eine Elastomerfalte 6 auf. In dem hier gezeigten Ausführungsbeispiel weist die Elastomermanschette 4 einen Anschlagkragen 7 mit drei rotationssymmetrisch am Anschlagkragen 7 verteilt angeordneten Ausnehmungen 8 auf. In den Ausnehmungen 8 sind Federklammern 9 angeordnet, mit denen die Elastomermanschette 4 am Lagerträger 1 gesichert ist. Die Federklammern 9 weisen in Schneidkanten 10 zusammenlaufende Klemmflächen sowie einen jeweils formschlüssig mit den Ausnehmungen 8 der Elastomermanschette 4 zusammenwirkenden Klammerkopf 11 auf. Die Federklammern 9 sind U-förmig und umgreifen den Rand des Lagerträgers 1. Also den durch die Öffnung im Lagerträger definierten Rand. Somit kontaktiert der innenliegende Teil der Federklammern 9 den innenliegenden Teil des Lagerträgers 1, also den Teil, der dem Drehlager 2 zugewandt ist. Der außenliegende Teil der Federklammern 9 kontaktiert den außenliegenden Teil des Lagerträgers 1, der dem Drehlager 2 abgewandt ist. Die Ausnehmungen 8 der Elastomermanschette 4 weisen Durchbrüche 12 mit Senkungen 13 zur oberflächenbündigen Aufnahme der Klammerköpfe 11 auf. In dem hier gezeigten Ausführungsbeispiel sind die Durchbrüche 12 der Ausnehmungen 8 der Elastomermanschette 4 derart ausgebildet, dass diese ein Durchstecken zumindest eines Teils der Federklammern 9 durch die Elastomermanschette 4 erlauben, so dass der durchgesteckte Teil der Federklammern 9 die Innenseite des Lagerträgers 1 unmittelbar berühren können. In dem hier gezeigten Ausführungsbeispiel ist der Durchbruch 12 derart ausgestaltet, dass wenn der durchgesteckte Teil der Federklammern 9 die Innenseite des Lagerträgers 1 berührt, die Elastomermanschette 4 nicht die Federklammern 9 berührt. Es kann also gesagt werden, dass im Bereich der Durchbrüche 12 in dem hier gezeigten Ausführungsbeispiel eine Lücke zwischen den Federklammern 9 und der Elastomermanschette 4 existiert. In dem hier gezeigten Ausführungsbeispiel weisen die Ausnehmungen 8 also zwei offene Seiten auf, die eine Seite ist als Durchbruch 12 ausgestaltet zum Durchstecken des innenliegenden Teils der Federklammern 9 und die andere Seite ist zur Innenseite des Lagerträger 1 offen, so dass der innenliegenden Teils der Federklammern 9 den Lagerträger 1 kontaktieren kann.

Die Elastomermanschette 4 weist eine einzige Elastomerfalte 6 auf, über deren Faltenverlauf hinweg das Manschettenmaterial eine Steifigkeitsschwächung 14 hat, welche in der Figur durch einen punktierten Bereich dargestellt ist.

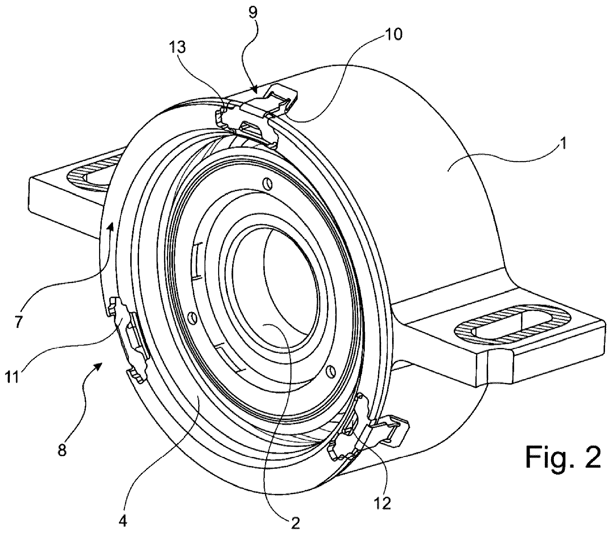

Die Fig. 2 zeigt eine perspektivische Ansicht der erfindungsgemäßen Lageranordnung gemäß Fig. 1. Gleiche Bauteile sind mit gleichen Bezugszahlen versehen. In dem hier gezeigten Ausführungsbeispiel sind die Klammerköpfe 11 der Federklammern 9 vertieft gesetzt mit dem Anschlagkragen 7. Die Klammerköpfe 11 erstrecken sich also nicht über den Anschlagkragen 7 hinweg, so dass ein weiteres Bauteil direkt auf dem Anschlagkragen 7 aufsetzen kann. Hierzu sind die Senkungen 13 der Ausnehmungen 8 und deren Erstreckung im Anschlagkragen 7 komplementär zu den Klammerköpfen 11 ausgestaltet. Dies bewirkt zusätzlich einen Formschluss der Klammerköpfe 11 mit dem Anschlagkragen 7, was ein Verdrehen der Elastomermanschette 4 verhindert.

Des Weiteren sind in dem in Fig. 2 gezeigten Ausführungsbeispiel die Schneidkanten 10 der Federklammern 9 zu sehen, die sich in die äußere Oberfläche des Lagerträgers 1 krallen, um so einen Auszug der Elastomermanschette 4 aus dem Lagerträger 1 zu verhindern. Die Federklammern 9 zusammen mit dem Anschlagkragen 7 bewirken also, dass die Elastomermanschette 4 in die zwei axialen Richtungen fixiert wird. Anders gesagt, die Elastomermanschette 4 kann sich weder in die eine Richtung - in dem hier gezeigten Ausführungsbeispiel die nach vorne - noch die andere Richtung - in dem hier gezeigten Ausführungsbeispiel die nach hinten - aus dem Lagerträger bewegen. Des Weiteren sorgen die Federklammern 9 auch noch dafür, dass sich die Elastomermanschette 4 nicht im Lagerträger verdrehen kann.

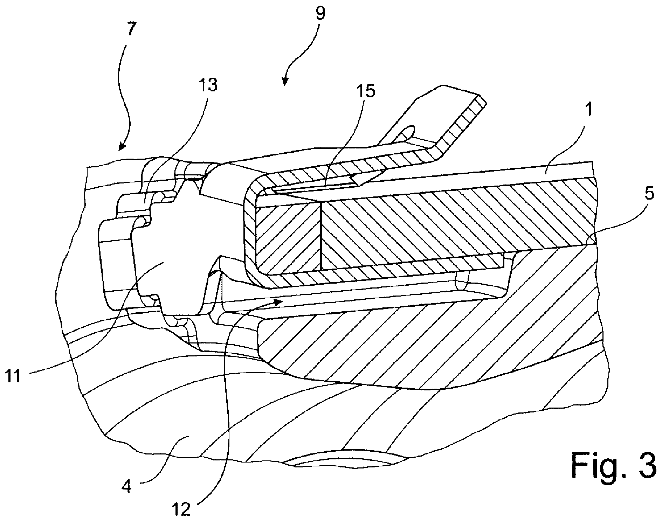

Die Fig. 3 zeigt eine vergrößerte Detailansicht der erfindungsgemäßen Lageranordnung gemäß Fig. 2. Das dargestellte Detail betrifft den Sitz einer der Federklammern 9 am Lagerträger 1, wobei erkennbar ist, dass an den Schenkeln der Federklammer 9 wirkende Klemmkräfte beim Aufstecken der Federklammer 9 auf den Lagerträger 1 eine kratzerartige Oberflächenverletzung 15 hinterlassen haben, mit welcher eine Verkrallung ausgebildet ist. Gleiche Bauteile sind mit gleichen Bezugszahlen versehen.

In dem hier gezeigten Ausführungsbeispiel und gemäß der beanspruchten Erfindung ist die Federklammer 9 U-förmig ausgestaltet. Der innenliegenden Schenkel oder Teil der Federklammer 9 kontaktiert unmittelbar die Innenseite des Lagerträgers 1, also die Seite des Lageträgers 1, die dem Drehlager 2 zugewandt ist. Der außenliegende Schenkel oder Teil der Federklammer 9 weist die Schneidkanten 10 auf, die sich an der Außenseite des Lagerträgers 1 mit diesem verkrallen, um so ein Lösen der Federklammer 9 zu verhindern. Bedingt durch die direkte Kontaktierung des Lagerträgers 1 durch die Federklammer 9 auf der Innenseite des Lagerträgers 1 sowie auf der Außenseite des Lagerträgers 1 wird eine größtmögliche Klemmwirkung erzielt, da sich die Schenkel der Federklammer 9 gegen das relativ harte Material des Lagerträgers 1 stemmen können. Dies bewirkt eine größtmögliche axiale Fixierung der Elastomermanschette 4.

In dem hier gezeigten Ausführungsbeispiel ist der Klammerkopf 11 komplementär zur Senkung 13 der Ausnehmung 8 im Anschlagskragen 7 ausgestaltet. Der Klammerkopf 11 stellt eine formschlüssige Verbindung mit der Senkung 13 her und ist in dieser derart angeordnet, dass der Klammerkopf 11 nicht über den Anschlagskragen 7 hinausragt. Dem Fachmann ist bewusst, dass auch von der hier gezeigten Form des Klammerkopfes 11 abgewichen werden kann, ohne dessen Funktion zu beeinträchtigen. Unterhalb des Klammerkopfes 11 ist in dem hier gezeigten Ausführungsbeispiel zu sehen, dass sich zwischen dem Rand des Lagerträgers 1 und dem Klammerkopf 11 ein Teil des Anschlagskragens 7 erstreckt. Dies bedeutet, die Senkung 13 erstreckt sich nicht über die gesamte Höher des Anschlagskragens 7. Es wird erkannt werden, dass der unter dem Klammerkopf 11 liegende Teil des Anschlagskragens 7 zwischen dem Rand des Lagerträgers 1 und dem Klammerkopf 11 gehalten wird. Die Federklammern 9 fixieren also den Anschlagskragen 7 auf dem Rand des Lagerträgers 1 und somit die Elastomermanschette 4 und das Drehlager 2 in dem Lagerträger 1 beziehungsweise in der zentralen Öffnung im Lagerträger 1.

Alle in der vorstehenden Beschreibung und in den Ansprüchen genannten Merkmale sind in einer beliebigen Auswahl mit den Merkmalen des unabhängigen Anspruchs kombinierbar. Die Erfindung ist auf den Umfang der beigefügten Ansprüche beschränkt.

## Patentansprüche

1. Lageranordnung zum Einbau in einen Lagerträger, mit wenigstens einem Drehlager sowie wenigstens einer das Drehlager aufnehmenden Elastomermanschette, wobei die Elastomermanschette wenigstens eine zur Aufnahme in den Lagerträger ausgebildete Reibschlussfläche hat,
wobei die Elastomermanschette (4) wenigstens einen Anschlagkragen (7) aufweist,
wobei die Elastomermanschette (4) Ausnehmungen (8) aufweist, und
wobei in den Ausnehmungen (8) U-förmige Federklammern (9) angeordnet sind, mit denen die Elastomermanschette (4) am Lagerträger (1) gesichert ist,
**dadurch gekennzeichnet, dass**
die U-förmigen Federklammern (9) den Lagerträger (1) durch die Ausnehmungen (8) hindurch umgreifen und den Anschlagskragen (7) der Elastomermanschette (4) am Rand des Lagerträgers fixieren, und dass, in eingebautem Zustand, ein innenliegender Teil der U-förmigen Federklammern (9) den innenliegenden Teil des Lagerträgers kontaktiert und ein außenliegender Teil der U-förmigen Federklammern (9) den außenliegenden Teil des Lagerträgers kontaktiert.

2. Lageranordnung nach Anspruch 1, **dadurch gekennzeichnet, dass** die U-förmigen Federklammern (9) in Schneidkanten (10) zusammenlaufende Klemmflächen aufweisen.

3. Lageranordnung nach Anspruch 1 oder 2, **dadurch gekennzeichnet, dass** die U-förmigen Federklammern (9) jeweils einen formschlüssig mit den Ausnehmungen (8) zusammenwirkenden Klammerkopf (11) aufweisen.

4. Lageranordnung nach Anspruch 1 oder 2, **dadurch gekennzeichnet, dass** die Ausnehmungen (8) der Elastomermanschette (4) Durchbrüche (12) mit Senkungen (13) zur oberflächenbündigen Aufnahme der Klammerköpfe (11) aufweisen.

5. Lageranordnung nach einem der Ansprüche 1 bis 4, **dadurch gekennzeichnet, dass** die Lageranordnung wenigstens drei rotationssymmetrisch angeordneten U-förmige Federklammern (9) aufweist, mittels derer die Elastomermanschette (4) am Lagerträger (1) gesichert ist.

6. Lageranordnung nach einem der Ansprüche 1 bis 5, **dadurch gekennzeichnet, dass** die U-förmigen Federklammern (9) aus Federstahlblech gefertigte Biegeteile sind.

7. Lageranordnung nach einem der Ansprüche 1 bis 6, **dadurch gekennzeichnet, dass** die Elastomermanschette (4) wenigstens eine Elastomerfalte (6) aufweist, über deren Faltenverlauf hinweg das Manschettenmaterial wenigstens eine Steifigkeitsschwächung (14) hat.

## Claims

1. A bearing assembly to be mounted in a bearing support, having at least one rotary bearing and at least one elastomer sleeve receiving the rotary bearing, wherein the elastomer sleeve has at least one frictional contact surface which is configured to be received in the bearing support,
wherein the elastomer sleeve (4) comprises at least one stop collar (7),
wherein the elastomer sleeve (4) comprises recesses (8), and wherein U-shaped spring clips (9) are arranged in the recesses (8), with which the elastomer sleeve (4) is secured to the bearing support (1),
**characterised in that**
the U-shaped spring clips (9) engage around the bearing support (1) through the recesses (8) and fix the stop collar (7) of the elastomer sleeve (4) to the edge of the bearing support, and **in that** an inner part of the U-shaped spring clips (9) contacts the inner part of the bearing support and an outer part of the U-shaped spring clips (9) contacts the outer part of the bearing support.

2. The bearing assembly according to claim 1, **characterised in that** the U-shaped spring clips (9) comprise clamping surfaces which converge in cutting ridges (10).

3. The bearing assembly according to claim 1 or 2, **characterised in that** the U-shaped spring clips (9) each comprise a clip head (11) which interacts with the recesses (8) in a form-fit manner.

4. The bearing assembly according to claim 1 or 2, **characterised in that** the recesses (8) of the elastomer sleeve (4) comprise apertures (12) with countersinks (13) for receiving the clip heads (11) in a surface-flush manner.

5. The bearing assembly according to any of claims 1 to 4, **characterised in that** the bearing assembly comprises at least three rotationally symmetrically arranged U-shaped spring clips (9), by means of which the elastomer sleeve (4) is secured to the bearing support (1).

6. The bearing assembly according to any of claims 1 to 5, **characterised in that** the U-shaped spring clips (9) are bent parts manufactured from spring steel sheets.

7. The bearing assembly according to any of claims 1 to 6, **characterised in that** the elastomer sleeve (4) comprises at least one elastomeric fold (6), over the fold course of which the sleeve material has at least one weakening of rigidity (14).

## Revendications

1. Agencement de palier à insérer dans un support de palier, comprenant au moins un palier de pivot ainsi qu'au moins un manchon en élastomère recevant le palier de pivot, le manchon en élastomère ayant au moins une surface de liaison par friction conçue pour être logée dans le support de palier,
le manchon en élastomère (4) comportant au moins un collet de butée (7),
le manchon en élastomère (4) comportant des évidements (8), et
dans les évidements (8) étant disposées des attaches élastiques en forme de U (9) avec lesquelles le manchon en élastomère (4) est immobilisé contre le support de palier (1),
**caractérisé en ce que**
les attaches élastiques en forme de U (9) enserrent le support de palier (1) à travers les évidements (8) et plaquent le collet de butée (7) du manchon en élastomère (4) contre le bord du support de palier, et **en ce que**, à l'état inséré, une partie intérieure des attaches élastiques en forme de U (9) est en contact avec la partie intérieure du support de palier, et une partie extérieure des attaches élastiques en forme de U (9) est en contact avec la partie extérieure du support de palier.

2. Agencement de palier selon la revendication 1, **caractérisé en ce que** les attaches élastiques en forme de U comportent des surfaces de serrage qui convergent sous forme d'arêtes de coupe (10).

3. Agencement de palier selon la revendication 1 ou 2, **caractérisé en ce que** les attaches élastiques en forme de U (9) comportent respectivement une tête d'attache (11) coopérant par conjugaison de formes avec les évidements (8).

4. Agencement de palier selon la revendication 1 ou 2, **caractérisé en ce que** les évidements (8) du manchon en élastomère (4) comportent des cavités (12) avec des renfoncements (13) pour recevoir les têtes d'attaches (11) à fleur de la surface.

5. Agencement de palier selon une des revendications 1 à 4, **caractérisé en ce que** l'agencement de palier comporte au moins trois attaches élastiques en forme de U (9) disposées selon une symétrie de révolution, au moyen desquelles le manchon en élastomère (4) est immobilisé contre le support de palier (1).

6. Agencement de palier selon une des revendications 1 à 5, **caractérisé en ce que** les attaches élastiques en forme de U (9) sont des pièces pliées fabriquées en tôle d'acier à ressort.

7. Agencement de palier selon une des revendications 1 à 6, **caractérisé en ce que** le manchon en élastomère (4) comporte au moins un pli en élastomère (6) sur le tracé plissé duquel la matière du manchon présente au moins un affaiblissement de rigidité (14).
